# EUROPÄISCHE PATENTSCHRIFT

(11) **EP 0 980 304 B1**
(45) Veröffentlichungstag und Bekanntmachung des Hinweises auf die Patenterteilung: **02.01.2002**
(21) Anmeldenummer: 99910295.7
(22) Anmeldetag: 26.02.1999
(51) Int. Cl.: B29C 43/36, B29C 33/30

(54) **TAUCHKANTENWERKZEUG**
SHEAR EDGE TOOL
OUTIL A BORDS PLONGEANTS

(30) Priorität: 06.03.1998 DE 19809720
(43) Veröffentlichungstag der Anmeldung: 23.02.2000
(73) Patentinhaber: Krauss-Maffei Kunststofftechnik GmbH, 80997 München (DE)
(72) Erfinder: LICHTINGER, Peter, D-82256 Fürstenfeldbruck (DE)
(74) Vertreter: Rucker, Bernd, Dipl.-Ing.
(86) Internationale Anmeldenummer: EP9901269
(87) Internationale Veröffentlichungsnummer: WO9944801

(56) Entgegenhaltungen:
- DE-A- 3 315 746
- DE-A- 3 820 232
- JP-A- 6 344 365
- US-A- 4 402 659
- PATENT ABSTRACTS OF JAPAN vol. 096, no. 007, 31. Juli 1996 & JP 08 057922 A (KOMATSU LTD), 5. März 1996 in der Anmeldung erwähnt

## Beschreibung

Die Erfindung betrifft ein Tauchkantenwerkzeug gemäß dem Oberbegriff von Patentanspruch 1.

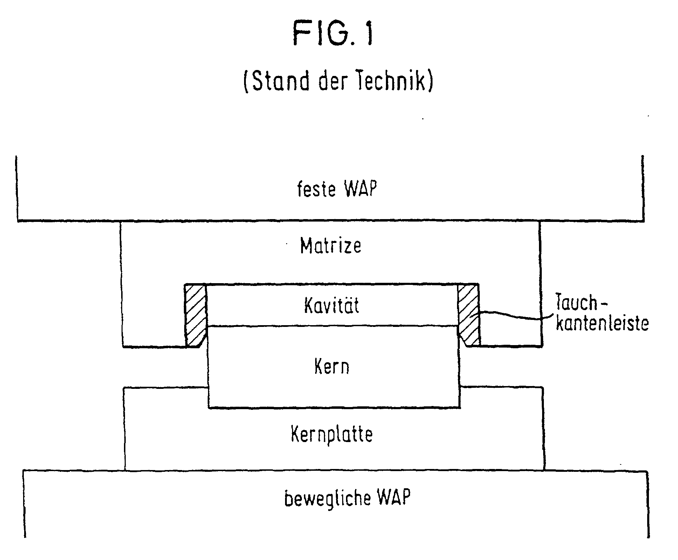

Fig. 1 zeigt in Querschnittsdarstellung ein aus dem Stand der Technik bekanntes Tauchkantenwerkzeug. Dieses besteht aus einer Matrize und einem in die Matrize eintauchenden Kern. Zum Führen des Kerns und zum Abdichten der Kavität besitzt die Matrize umlaufende Tauchkantenleisten. Diese bekannten Tauchkantenwerk-zeuge weisen folgende Nachteile auf:
Verletzung der Tauchkanten an beiden Werkzeughälften (Spritzseite und Schließseite) durch:
- nicht genau zentrisches Eintauchen der Kernseite in die Matrize;
- zu enges Matrizen-Maß aufgrund einer Werkzeugschrumpfung, hervorgerufen durch Temperaturabsenkung unterhalb der sehr engen Temperatur-Toleranzen;
- einseitiges Berühren der Tauchkanten aufgrund des beim Spritzprägen auftretenden Schwimmeffekts, der durch die größeren Maschinen-Führungstoleranzen nicht aufgefangen werden kann;
- durch zu großes Kern-Maß aufgrund einer Werkzeug-Ausdehnung, hervorgerufen durch Temperatur-Abweichung oberhalb der sehr engen Temperatur-Toleranzen.

Zur Behebung der genannten Nachteile sind Werkzeuge bekannt, bei denen der Kern mit einer oder mehreren umlaufenden Tauchkantenleisten versehen ist, die am Kern in Schließrichtung bewegbar angebracht sind und die im geschlossenen Zustand an ebene Bereiche der Matrize zum Anschlag gebracht werden können. In der US-PS 4,707,321 ist ein derartiges Werkzeug zum Herstellen von optischen Datenträgern offenbart, bei dem der kreisförmige Kern von einer kreisförmigen Tauchkantenleiste umgeben ist, die mittels Druckluft am Kern entlang in Richtung der Matrize bewegt werden kann. Die Tauchkantenleiste ist hierbei einstückig entsprechend dem Durchmesser des kreisförmigen Spritzlings ausgebildet. Für anders gestaltete Spritzlinge ist diese Tauchkantenleiste nicht geeignet. Aus der nächstkommenden Druckschrift "Patent Abstracts of Japan, Publication Number 08057922 A" ist ein Tauchkantenwerkzeug mit mehreren um den Kern umlaufenden Tauchkantenleisten bekannt, die an dem Kern in Schließrichtung bewegbar angebracht sind und die den Kern vollständig umgeben. Jede einzelne Tauchkantenleiste liegt in einer im Randbereich des Kerns umlaufenden, zur Matrizenseite offenen T-förmigen Nut und ist in radialer Richtung zweistückig ausgebildet. Damit jede Tauchkantenleiste in dieser Nut dicht anliegt, aber nicht verklemmt, sondern am Kern verschiebbar bleibt, werden die beiden Hälften jeder Tauchkantenleiste mit Federelementen auseinandergerückt, so daß sie an den sich gegenüberliegenden Nutinnenseiten anliegen. In dem Boden der Nut sind Federelemente vorgesehen, mit denen die Tauchkantenleisten in Richtung der Matrize unter Vorspannung gehalten werden. Beim Schließen des Werkzeugs wird die aus der Nut hervorstehende Tauchkantenleiste gegen die Matrize gedrückt, die im Auftreffbereich der Tauchkantenleiste eben ausgebildet ist. Dieses Tauchkantenwerkzeug ist vergleichsweise aufwendig konstruiert und ein Austausch defekter oder verschlissener Tauchkantenleisten ist mit einem nicht unerheblichem Aufwand verbunden. Ein weiterer Nachteil besteht darin, daß bei hohen Einspritz- oder Prägedrücken das innere Teil der Tauchkantenleiste nach außen weggedrückt wird, so daß Kunststoffmasse austreten kann und/oder Grate am Spritzling entstehen. Um dies zu vermeiden, müßte die untere Feder genügend stark vorgespannt sein, was seinerseits den Nachteil hat, daß die Tauchkantenleiste in der T-Nut nur noch schwer gangbar ist oder gar verklemmt.

Demgegenüber liegt der vorliegenden Erfindung die Aufgabe zugrunde, das bekannte Werkzeug dahingehend weiterzuentwickeln, daß die Vorteile gegenüber dem Standardtauchkantenwerkeug gemäß Fig. 1 erhalten bleiben, daß das Werkzeug aber als Ganzes einfacher gestaltet ist und insbesondere ein leichter Austausch einzelner Tauchkantenleisten möglich ist.

Die Lösung dieser Aufgabe erfolgt bei einem Tauchkantenwerkzeug mit den Merkmalen des Oberbegriffs von Patentanspruch 1 durch die kennzeichnenden Merkmale. Vorteilhafte Weiterentwicklungen und Ausgestaltungen finden sich in den Unteransprüchen. Der Hauptvorteil der vorliegenden Erfindung liegt in der besonderen Ausgestaltung der Befestigung der Tauchkantenleisten an dem Kern. Durch die seitliche Befestigung mit Distanzund Halteelementen wird einerseits eine Verschiebung der Tauchkantenleisten an dem Kern entlang ermöglicht, und andererseits kann das Anbringen und Lösen der Tauchkantenleisten von dem Kern einfacher durchgeführt werden. Durch den festen Toleranzspalt liegen konstante, minimale Reibungsverhältnisse vor, wodurch die Verfügbarkeit des Werkzeugs wesentlich erhöht wird. Auch bei vergleichsweise starken Temperaturschwankungen kann es nicht zu einem Verklemmen der Tauchkantenleisten am Kern kommen, da durch die erfindungsgemäße seitliche Anbringung die Tauchkantenleisten temperaturbedingte Größenveränderungen des Kerns einfach "mitmachen".

Die Erfindung weist zudem folgende Vorteile auf:
- Einhaltung eines umlaufend konstanten Tauchspaltes von ca. 0,01 bis 0,02mm, unabhängig von:
   . Werkzeugtemperaturschwankungen bzw. bewußter -temperatur veränderung;
   . unabhängig von den Maschinen-Führungstoleranzen;
   . unabhängig von den Teile-/Werkzeugdimensionen;
- sehr hohe Werkzeug-Verfügbarkeit;
- kein Entgraten oder Nacharbeiten der Kunststoffteilekanten erforderlich.

Nachfolgend soll die Erfindung unter Bezugnahme auf die Fig. 2 bis 4 näher erläutert werden. Es zeigen:
- Fig. 1:: Tauchkantenwerkzeug nach dem Stand der Technik
- Fig. 2:: erfindungsgemäßes Tauchkantenwerkzeug im Querschnitt
- Fig. 3:: erfindungsgemäßes Tauchkantenwerkzeug in Draufsicht aus der Perspektive der Matrize, also in Richtung des Pfeils in Fig. 2
- Fig. 4:: Detailansicht des Tauchkantenwerkzeugs aus Fig. 2 und 3.

Bevorzugtes Anwendungsgebiet der erfindungsgemäßen Tauchkantenwerkzeuge ist die Herstellung von Kunststoffscheiben, wie sie beispielsweise als Seitenscheiben für PKW's verwendet werden. Die Erfindung ist jedoch nicht hierauf beschränkt, sondern allgemein für die Herstellung von Formteilen mit Tauchkantenwerkzeugen anwendbar, also generell beim Spritzprägen.

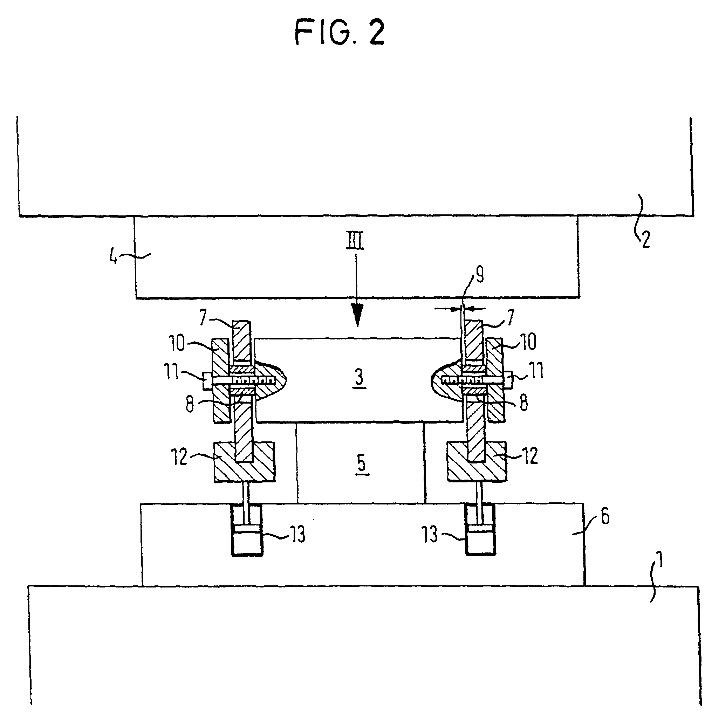

Gemäß Fig. 2 sind auf einer beweglichen Werkzeugaufspannplatte 1 und einer festen Werkzeugaufspannplatte 2 einer Kunststoff verarbeitenden Maschine ein Kern 3 und eine Matrize 4 aufgespannt. Der Kern 3 ist auf der beweglichen Werkzeugaufspannplatte 1 über ein Zwischenstück 5 und eine Kernaufnahmeplatte 6 befestigt. Um den Kern 3 umlaufend sind Tauchkantenleisten 7 verschiebbar, aber dich- tend, angebracht. Hierfür sind Distanzhülsen 8 in Ausnehmungen der Tauchkantenleisten 7 angeordnet, die geringfügig größer sind als der Querschnitt der Tauchkantenleisten 7. Es wird also ein kleiner Spalt 9 gebildet, der im Bereich von 0,01mm bis 0,02mm liegt. Zur umlaufenden Montage der Tauchkantenleisten 7 an den Kern 3 dienen Halteelemente 10, die mittels im Kern eingedrehter Befestigungsschrauben 11 fest an die Distanzhülsen 8 angedrückt werden. Durch diese Montage ist sichergestellt, daß unabhängig von der Wärmeausdehnung oder der Kälteschrumpfung immer exakt gleiche Spaltmasse eingehalten werden. Da die Tauchkantenleisten 7 keine Eintauch-Bewegung in die gegenüberliegende Matrize 4 ausführen, kann kein Verklemmen oder Verkanten vorkommen und zwar unabhängig von der Temperatur. Je nach herzustellendem Formteil sind die Tauchkantenleisten 7 aus mehreren Teilstücken zusammengesetzt. Die Tauchkantenleisten 7 werden auf einem um den Kern 3 umlaufenden Trägerrahmen 12 montiert, so daß bei Wärmeausdehnung oder Kälteschrumpfung der Kern 3 (oder der Trägerrahmen 12) eine Relativbewegung zwischen den Tauchkantenleisten 7 und dem Trägerrahmen 12 erfolgen kann. In der Regel reichen die üblichen Toleranzen beim Anschrauben der Tauchkantenleisten 7 auf den Trägerrahmen 12 aus, so daß in den Figuren keine Toleranzspalte hierfür eingezeichnet sind. Mehrere Kolben-Zylinder-Einheiten 13 schieben die Tauchkantenleisten 7 über den Kern 3 hinaus, damit eine Kavität gebildet wird, wenn die Tauchkantenleisten 7 an der Matrize 4 anstoßen. Wenn mit dem Kern 3 der Prägehub ausgeführt wird, können die Kolben-Zylinder-Einheiten 13 in gleicher Weise entlastet werden, damit einerseits der Druck der Tauchkantenleisten 7 auf die Matrize 4 nicht zu groß wird und damit andererseits ein ausreichender Prägedruck aufgebracht werden kann. Für die Abdichtung der Tauchkantenleisten-Trennflächen an der Matrizentrennfläche können neben Kolben-Zylinder-Einheiten auch Federn oder Keile verwendet werden und zwar sowohl mit als auch ohne Steuerung für den parallelen Gleichlauf. Die Andrückelemente 13 können direkt auf die Tauchkantenleisten oder auf den Trägerrahmen 12 einwirken.

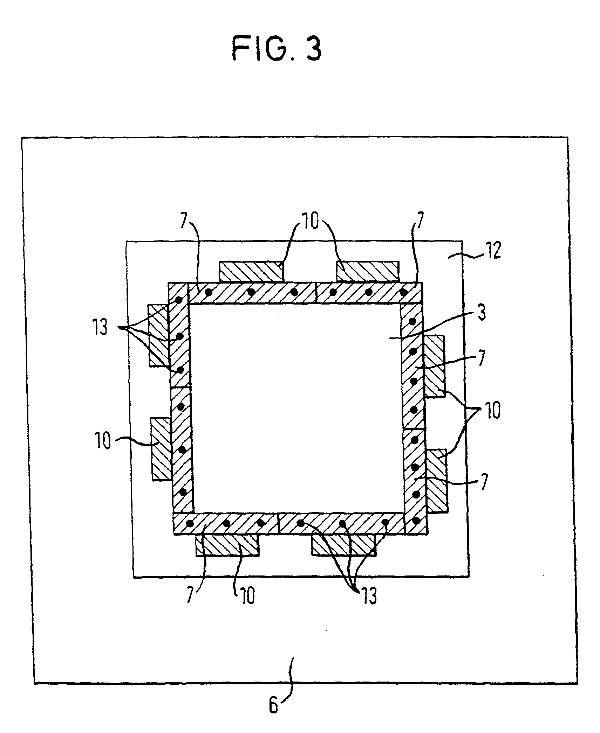

Aus der Aufsicht in Fig. 3 läßt sich die umlaufende Montage der Tauchkantenleisten 7 ersehen. Für jede Tauchkantenleiste 7 ist mindestens ein Halteelement 10 erforderlich. Der Einfachheit halber sind die Distanzhülsen und die Befestigungsschrauben nicht eingezeichnet. Unter jeder Tauchkantenleiste 7 sind drei oder vier Kolben-Zylinder-Einheiten 13 angeordnet. Damit lassen sich die Tauchkantenleisten genau bewegen und der Anpressdruck für jede Tauchkantenleiste 7 gegebenenfalls separat einstellen. Durch geschickte Anordnung der Tauchkantenleisten, wie dies in Fig. 3 für ein quadratisches Formteil gezeigt ist, können sich diese gegeneinander verschieben (z.B. unter Temperatureinwirkung), ohne daß die Kavität undicht würde. Im vorliegenden Fall können sich Tauchkantenleisten 7 an jedem Rand über diesen hinaus ausdehnen.

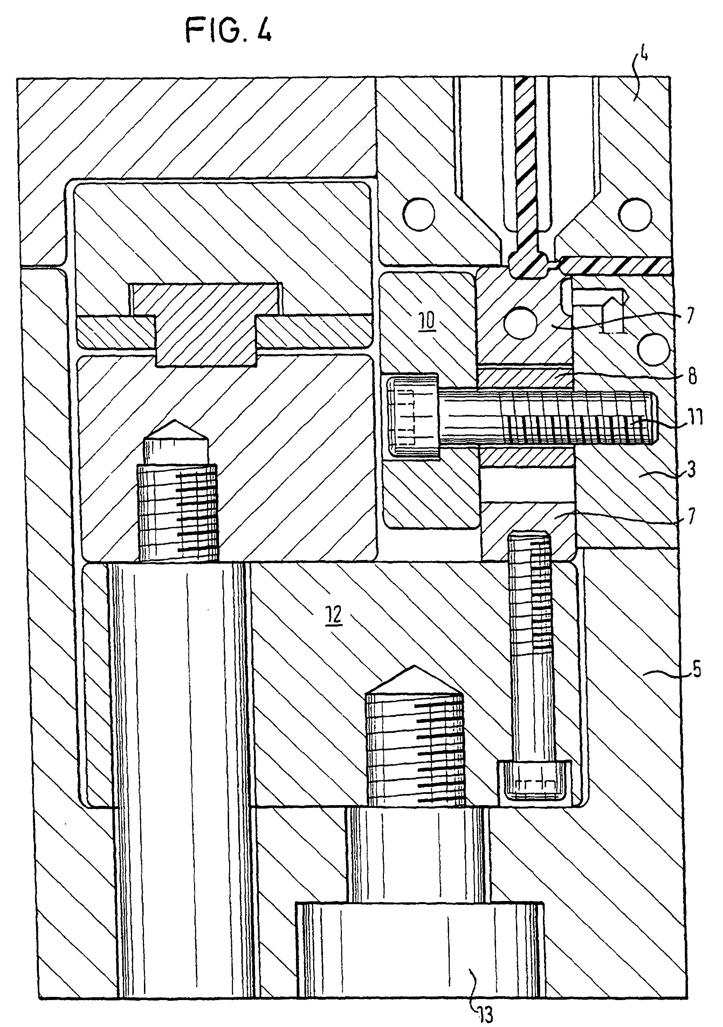

Fig. 4 zeigt im Querschnitt eine vergrößerte Darstellung einer Seite des Werkzeugs. Mittels der Befestigungsschraube 11 ist das Halteelement 10 an dem Kern 3 angeschraubt und wird fest gegen die Distanzhülse 8 angedrückt. Da die Distanzhülse geringfügig größer ist als der Querschnitt der Tauchkantenleiste 7 können diese gegenüber dem Kern 3 bewegt werden. Der Spalt ist in Fig. 4 der Einfachheit halber nicht eingezeichnet. Im Gegensatz zu Fig. 3 sind die Kolben-Zylinder-Einheiten der Tauchkantenleisten nicht symmetrisch genau unter den Tauchkantenleisten positioniert, sondern etwas außerzentrisch. Durch die massive Ausbildung des Trägerrahmens 12 ist dies jedoch unproblematisch.

### Bezugszeichenliste

- 1: bewegliche Werkzeugaufspannplatte
- 2: feste Werkzeugaufspannplatte
- 3: Kern
- 4: Matrize
- 5: Zwischenstück
- 6: Kernplatte
- 7: Tauchkantenleiste
- 8: Distanzhülsen
- 9: Spalt
- 10: Halteelement
- 11: Befestigungsschrauben
- 12: Trägerrahmen
- 13: Kolben-Zylinder-Einheiten bzw. Andrückelemente

## Patentansprüche

1. Tauchkantenwerkzeug mit einem Kern (3) und einer Matrize (4) sowie umlaufenden Tauchkantenleisten (7), wobei die Tauchkantenleisten (7) an dem Kern (3) in Schließrichtung bewegbar angebracht sind, wobei der Kern (3) von den Tauchkantenleisten (7) vollständig umfaßt ist, und wobei die Matrize (4) im Bereich der Anschlagflächen der Tauchkantenleisten (7) diesen Anschlagflächen entsprechend ausgebildet ist, **dadurch gekennzeichnet, daß** jede Tauchkantenleiste (7) mit mindestens einem Distanz- und Halteelement (8; 10) seitlich am Kern (3) angebracht ist, wobei das Distanzelement (8) geringfügig länger als der Querschnitt der Tauchkantenleiste (7) ist, so daß ein kleiner Spalt (9) gebildet wird.

2. Tauchkantenwerkzeug nach Anspruch 1, **dadurch gekennzeichnet, daß** der Spalt (9) kleiner als 0,05mm ist und vorzugweise zwischen 0,01mm und 0,02mm beträgt.

3. Tauchkantenwerkzeug nach Anspruch 1 oder 2, **dadurch gekennzeichnet, daß** es sich bei dem Distanzelement um eine Distanzhülse (8) handelt und daß als Halteelement eine Halteleiste (10) vorgesehen ist, die mit einem Befestigungselement (11), beispielsweise einer Schraube, an dem Kern (3) befestigt ist, wobei das Befestigungselement (11) in dem Raum zwischen Halteleiste (10) und Kern (3) von der Distanzhülse (8) umgeben ist.

4. Tauchkantenwerkzeug nach Anspruch 1 oder 2, **dadurch gekennzeichnet, daß** das Distanz- und Halteelement (8; 10) nach Art eines T-Nutensteins einstückig ausgebildet ist und die Tauchkantenleisten (7) mit entsprechenden Ausnehmungen versehen sind.

5. Tauchkantenwerkzeug nach einem der Ansprüche 1 bis 4, **dadurch gekennzeichnet, daß** Mittel (13) zum Bewegen der Tauchkantenleisten (7) relativ zum Kern (3) vorgesehen sind.

6. Tauchkantenwerkzeug nach Anspruch 5, **dadurch gekennzeichnet, daß** für die Bewegung der Tauchkanten (7) mehrere hydraulisch und/oder pneumatisch betätigbare Kolben-Zylinder-Einheiten (13) vorgesehen sind.

7. Tauchkantenwerkzeug nach Anspruch 5, **dadurch gekennzeichnet, daß** für die Bewegung der Tauchkanten (7) mehrere elektromechanisch angetriebene Spindeln vorgesehen sind.

8. Tauchkantenwerkzeug nach einem der Ansprüche 1 bis 7, **dadurch gekennzeichnet, daß** unter den Tauchkantenleisten (7) Federelemente, beispielsweise Ringfedern, vorgesehen sind, die die Tauchkantenleisten (7) in Richtung der Matrize (4) gespannt halten.

9. Tauchkantenwerkzeug nach einem der Ansprüche 1 bis 8, **dadurch gekennzeichnet, daß** die Tauchkantenleisten (7) auf einem um den Kern (3) umlaufenden Trägerrahmen (12) befestigt sind.

10. Tauchkantenwerkzeug nach Anspruch 9, **dadurch gekennzeichnet, daß** die Mittel (13) zum Bewegen der Tauchkantenleisten (7) und/oder die Federelemente zwischen dem Trägerrahmen (12) und der auf der beweglichen Werkzeugaufspannplatten befestigten Kernplatte angebracht sind.

11. Tauchkantenwerkzeug nach Anspruch 9 oder 10, **dadurch gekennzeichnet, daß** der Trägerrahmen (12) den Kern (3) hintergreift und die Mittel (13) zum Bewegen der Tauchkantenleisten (7) und/oder die Federelemente genau unter den Tauchkantenleisten (7) positioniert sind.

12. Tauchkantenwerkzeug nach einem der Anspüche 9 bis 11, **dadurch gekennzeichnet, daß** im Bereich der Anschlagflächen der Tauchkantenleisten (7) in der am Kern (3) anliegenden Fläche Kanäle vorgesehen sind, die mit im Kern (3) verlaufenden Kanälen korrespondieren und die bis in die Nähe der Kernfläche verlaufen, so daß bei einer Bewegung der Tauchkantenleisten (7) in Schließrichtung das fertige Kunststofformteil leicht angehoben wird und über die Kanäle ein Gas, vorzugsweise Reinluft, zugeführt wird.

13. Tauchkantenwerkzeug nach einem der Ansprüche 1 bis 12, **dadurch gekennzeichnet, daß** die Matrize (4) wenigstens im Bereich der Anschlagflächen der Tauchkantenleisten (7) eben ausgebildet ist.

14. Verwendung eines Tauchkantenwerkzeuges nach einem der Ansprüche 1 bis 13 für die Herstellung von Kunststoffscheiben, insbesondere von Seitenfenster für Fahrzeuge.

## Claims

1. Positive mould with a core (3) and a female die (4) and peripheral vertical flash face strips (7), the vertical flash face strips (7) being movably attached to the core (3) in the closing direction, the core (3) being completely surrounded by the vertical flash face strips (7), and in the region of the stop faces of the vertical flash face strips (7), the female die (4) being designed to correspond with these stop faces, **characterised in that** each vertical flash face strip (7) is attached laterally to the core (3) by at least one spacer and retaining element (8; 10), the spacer element (8) being slightly longer than the cross-section of the vertical flash face strip (7), so a small gap (9) is formed.

2. Positive mould according to claim 1, **characterised in that** the gap (9) is less than 0.05 mm and is preferably between 0.01 nm and 0.02 nm.

3. Positive mould according to claim 1 or 2, **characterised in that** the spacer element is a spacer sleeve (8) and **in that** a retaining strip (10) is provided as retaining element, which is fastened to the core (3) by a fastening element (11), for example a screw, the fastening element (11) being surrounded in the space between retaining strip (10) and core (3) by the spacer sleeve (8).

4. Positive mould according to claim 1 or 2, **characterised in that** the distance and retaining element (8; 10) is designed integrally in the manner of a T-sliding block and the vertical flash face strips (7) are provided with corresponding recesses.

5. Positive mould according to any one of claims 1 to 4, **characterised in that** means (13) for moving the vertical flash face strips (7) relative to the core (3) are provided.

6. Positive mould according to claim 5, **characterised in that** a plurality of hydraulically and/or pneumatically actuatable piston-cylinder units (13) are provided for moving the vertical flash faces (7).

7. Positive mould according to claim 5, **characterised in that** a plurality of electromechanically driven spindles are provided for moving the vertical flash faces (7).

8. Positive mould according to any one of claims 1 to 7, **characterised in that** spring elements, for example annular springs, are provided beneath the vertical flash face strips (7), which spring elements hold the vertical flash face strips (7) taut in the direction of the female die (4).

9. Positive mould according to any one of claims 1 to 8, **characterised in that** the vertical flash face strips (7) are fastened to a support frame (12) surrounding the core (3).

10. Positive mould according to claim 9, **characterised in that** means (13) for moving the vertical flash face strips (7) and/or the spring elements between the support frame (12) and the core plate fastened to the moving platen are attached.

11. Positive mould according to claim 9 or 10, **characterised in that** the support frame (12) engages behind the core (3) and the means (13) for moving the vertical flash face strips (7) and/or the spring elements are positioned precisely beneath the vertical flash face strips (7).

12. Positive mould according to any one of claims 9 to 11, **characterised in that** ducts are provided in the region of the stop faces of the vertical flash face strips (7) in the face adjacent to the core (3), which ducts correspond to the ducts extending in the core (3) and which extend into the vicinity of the core face, so the finished plastics mould part is raised slightly when the vertical flash face strips (7) are moved in the closing direction, and a gas, preferably filtered air, is supplied via the ducts.

13. Positive mould according to any one of claims 1 to 12, **characterised in that** the female die (4) is flat in design at least in the region of the stop faces of the vertical flash face strips (7).

14. Use of a positive mould according to any one of claims 1 to 13 for producing plastic sheets, in particular side-windows for vehicles.

## Revendications

1. Outil à bords plongeants avec un noyau (3) et une matrice (4) et des baguettes périphériques à bords plongeants (7), les baguettes à bords plongeants (7) étant disposées de façon mobile sur le noyau (3) dans le sens de fermeture, le noyau (3) étant complètement entouré par les baguettes à bords plongeants (7), et la matrice (4) étant conçue en fonction de ces surfaces de butée dans la zone des surfaces de butée des baguettes à bords plongeants (7), **caractérisé en ce que** chaque baguette à bords plongeants (7) avec au moins un élément d'écartement et un élément de retenue (8 ; 10) sont disposés sur le côté du noyau (3), l'élément d'écartement (8) étant légèrement plus long que la section de la baguette à bords plongeants (7), de sorte qu'une petite fente (9) est formée.

2. Outil à bords plongeants selon la revendication 1, **caractérisé en ce que** la fente (9) est inférieure à 0,05 mm et se situe de préférence entre 0,01 mm et 0,02 mm.

3. Outil à bords plongeants selon la revendication 1 ou 2, **caractérisé en ce qu'**il s'agit pour l'élément d'écartement d'une douille d'écartement (8) et **en ce qu'**il est prévu comme élément de retenue une baguette de retenue (10) qui est fixée avec un élément de fixation (11), par exemple une vis, sur le noyau (3), l'élément de fixation (11) étant entouré par la douille d'écartement (8) dans l'espace entre la baguette de retenue (10) et le noyau (3).

4. Outil à bords plongeants selon la revendication 1 ou 2, **caractérisé en ce que** l'élément d'écartement et l'élément de retenue (8 ; 10) sont conçus d'une seule pièce à la façon d'un écrou pour rainure en T et les baguettes à bords plongeants (7) sont pourvues d'évidements appropriés.

5. Outil à bords plongeants selon l'une quelconque des revendications 1 à 4, **caractérisé en ce que** des moyens (13) sont prévus pour le déplacement des baguettes à bords plongeants (7) par rapport au noyau (3).

6. Outil à bords plongeants selon la revendication 5, **caractérisé en ce que** plusieurs unités piston-vérin (13) pouvant être actionnées de façon hydraulique et/ou pneumatique sont prévues pour le déplacement des bords plongeants (7).

7. Outil à bords plongeants selon la revendication 5, **caractérisé en ce que** plusieurs broches entraînées de façon électromécanique sont prévues pour le déplacement des bords plongeants (7).

8. Outil à bords plongeants selon l'une quelconque des revendications 1 à 7, **caractérisé en ce que**, sous les baguettes à bords plongeants (7), il est prévu des éléments de ressort, par exemples des ressorts annulaires, qui maintiennent sous tension les baguettes à bords plongeants (7) en direction de la matrice (4).

9. Outil à bords plongeants selon l'une quelconque des revendications 1 à 8, **caractérisé en ce que** les baguettes à bords plongeants (7) sont fixées sur un cadre support (12) entourant le noyau (3).

10. Outil à bords plongeants selon la revendication 9, **caractérisé en ce que** les moyens (13) pour déplacer les baguettes à bords plongeants (7) et/ou les éléments de ressort sont disposés entre le cadre support (12) et la plaque du noyau fixée sur les plaques mobiles de fixation d'outil.

11. Outil à bords plongeants selon la revendication 9 ou 10, **caractérisé en ce que** le cadre support (12) s'accroche derrière le noyau (3) et les moyens (13) pour le déplacement des baguettes à bords plongeants (7) et/ou les éléments de ressort sont positionnés exactement sous les baguettes à bords plongeants (7).

12. Outil à bords plongeants selon l'une quelconque des revendications 9 à 11, **caractérisé en ce que** dans la zone des surfaces de butée des baguettes à bords plongeants (7), dans la surface contiguë au noyau (3), il est prévu des canaux qui correspondent aux canaux agencés dans le noyau (3) et qui vont jusqu'à proximité de la surface du noyau, de sorte que, lors d'un déplacement des baguettes à bords plongeants (7) dans le sens de fermeture, la pièce finie en plastique moulé est légèrement soulevée et un gaz, de préférence de l'air pur, est amené par les canaux.

13. Outil à bords plongeants selon l'une quelconque des revendications 1 à 12, **caractérisé en ce que** la matrice (4) est conçue de façon plane au moins dans la zone des surfaces de butée des baguettes à bords plongeants (7).

14. Utilisation d'un outil à bords plongeants selon l'une quelconque des revendications 1 à 13 pour la fabrication de disques en plastique, en particulier de fenêtres latérales pour les véhicules.
